# FASCICULE DE BREVET EUROPEEN

(11) **EP 4 376 430 B1**
(45) Date de publication et mention de la délivrance du brevet: **04.03.2026**
(21) Numéro de dépôt: 23185827.5
(22) Date de dépôt: 17.07.2023
(51) Int. Cl.: H04N 23/60, H04N 23/74, H04N 23/80

(54) **DISPOSITIF ET PROCÉDÉ DE TRAITEMENT D'IMAGE**
BILDVERARBEITUNGSVORRICHTUNG UND BILDVERARBEITUNGSVERFAHREN
IMAGE PROCESSING DEVICE AND IMAGE PROCESSING METHOD

(30) Priorité: 24.11.2022 FR 2212301
(43) Date de publication de la demande: 29.05.2024
(73) Titulaire: IDEMIA Public Security France, 92400 Courbevoie (FR)
(72) Inventeur: SIWEK, Jean-François, 92400 COURBEVOIE (FR); AMMOUCHE, Karim, 92400 COURBEVOIE (FR); EL FEKI, Zied, 92400 COURBEVOIE (FR)
(74) Mandataire: IPS

(56) Documents cités:
- US-A1- 2006 221 187
- US-B1- 10 296 602

## Description

La présente invention concerne le domaine du traitement d'image en vue de la reconnaissance, notamment de données biométriques, par exemple à des fins d'authentification ou d'identification d'une personne ou de vérification de droit de la personne à accéder à un lieu donné ou à des informations données.

### Arrière-plan technologique

Classiquement, un dispositif de traitement d'image contient un système d'acquisition d'images, comportant au moins un capteur d'images, et usuellement un système d'éclairage, comportant par exemple une source de lumière infrarouge et/ou diode électroluminescente (LED) blanche. Le pilotage du capteur d'images, par exemple en durée d'exposition et gain, et du système d'éclairage, par exemple en intensité des LED, doit être ajusté en permanence pour s'adapter aux conditions d'éclairage de l'environnement. Cet ajustement dynamique est appelé contrôle automatique de gain (CAG).

Certains dispositifs de traitement d'image disposent également d'une caméra motorisée, notamment pour l'acquisition de caractéristiques biométriques telles que l'iris d'une personne.

Le but du CAG est notamment d'ajuster en temps réel les données de pilotage du système d'acquisition d'images et notamment du système d'éclairage afin d'optimiser certaines valeurs d'intensité sur les images, grâce à l'analyse de l'intensité des images acquises précédemment.

L'algorithme de CAG analyse typiquement les statistiques de l'image acquise telles que l'intensité moyenne sur une ou plusieurs régions d'intérêt / zones, les histogrammes d'intensité sur ladite image, en connaissant les données de pilotage au moment de l'acquisition de ladite image, c'est-à-dire la configuration exacte du système d'acquisition d'images et notamment du système d'éclairage au moment où cette image particulière a été acquise. Grâce à cette analyse, l'algorithme de CAG calcule une nouvelle configuration qui cible mieux l'objectif. L'algorithme ajuste ces paramètres de manière itérative, jusqu'à ce qu'il atteigne la stabilité des paramètres.

De manière générale, un délai existe, par exemple un délai de 2 images, avant que la nouvelle configuration soit prise en compte par le système d'acquisition d'images et/ou du système d'éclairage, ce qui est notamment dû à l'architecture interne du système d'acquisition d'images et/ou du système d'éclairage. L'algorithme de CAG doit donc prendre en compte ce délai pour que l'analyse de l'image soit correcte.

Si la synchronisation entre les paramètres et les images est mauvaise, l'analyse CAG résultant sera donc mauvaise, ce qui peut se traduire par des flashs ou des dépassements dans le pilotage de l'intensité de l'image, ce qui dégrade la convergence et potentiellement présente une gêne dans le cas où une personne est l'objet de l'image.

Dans le domaine des dispositifs de traitement d'image, notamment biométriques, l'objectif est d'optimiser les statistiques de l'image, en particulier sur certaines parties de l'image (comme un visage pour un dispositif de reconnaissance faciale), dans le temps le plus court possible afin de reconnaître la personne le plus rapidement possible.

Habituellement, le système d'acquisition d'images est piloté par un processeur de signal d'image (ISP) qui s'appuie sur des caractéristiques matérielles en temps réel pour appliquer les paramètres calculés par l'algorithme de CAG. Mais pour certains usages spécifiques, ce mode opératoire n'est pas adapté, par exemple pour optimiser l'image sur un objet particulier comme un visage et/ou un QR code et n'est pas non plus adapté dans le cas d'un système d'acquisition d'images non standard par exemple lors de l'utilisation d'un capteur de lumière non standard nécessitant un pilotage dédié spécifique, tel qu'un capteur RG-IR comme décrit dans la demande de brevet FR1911695.

Lorsque les paramètres calculés par l'algorithme de CAG ne peuvent pas être implémentés par un ISP standard, alors ils sont généralement appliqués via un logiciel non temps réel (comme sur un système d'exploitation Linux), car ce type de système d'exploitation offre beaucoup d'autres fonctionnalités pour le dispositif. Mais dans ce cas, il n'est pas possible de savoir exactement quels sont les paramètres de configuration d'une trame entrante, car l'instant où le logiciel non temps réel envoie la configuration n'est pas exactement connu, en raison par exemple de la préemption possible par des tâches plus prioritaires dans le système d'exploitation, mais aussi parce que les images acquises sont potentiellement mises en mémoire tampon dans un tampon premier entrée, premier sorti de plusieurs images.

Dans ce cas, la solution rapide est d'ajouter un délai de quelques trames dans le logiciel non temps réel entre l'émission de la nouvelle configuration au capteur et la première image à analyser, pour être sûr que la configuration a été appliquée par le capteur d'images et/ou la source de lumière. En effet, il est nécessaire dans ce cas de laisser passer plusieurs trames, c'est-à-dire images, avant de pouvoir faire le calcul, ce qui engendre une latence de plusieurs pas de temps. La conséquence est que la boucle CAG est beaucoup plus lente, ce qui entraîne un temps de convergence plus long et un mauvais temps de réponse du dispositif. Et dans le cas d'un algorithme de pointage d'une caméra haute résolution sur un objet en mouvement., cette latence entraine une dégradation des performances de suivi et une absence de déterminisme, ainsi que l'impossibilité du suivi d'une personne en mouvement rapide.

Pour éviter ce long temps de convergence, une solution serait d'activer une fonctionnalité de métadonnée du capteur d'acquisition d'images, la métadonnée contenant les paramètres d'exposition/gain d'une image particulière et permettant de connaître ces paramètres pour chaque image y compris sans synchronisation en temps réel, cependant tous les capteurs n'offrent pas cette fonctionnalité et cela ne permet pas de répondre au besoin de connaître l'éclairage appliqué sur une image, les métadonnées seules ne suffisent donc pas pour répondre à ce besoin.

En outre, dans le cas de dispositifs nécessitant non seulement un pilotage du capteur d'images, par exemple en durée d'exposition et/ou gain, mais également un pilotage d'un système d'éclairage, c'est à dire d'une source de lumière, notamment en intensité de lumière infrarouge et/ou lumière blanche, il est nécessaire de savoir quand les nouveaux paramètres propres à la commande d'une part du capteur d'images et d'autre part de la source lumineuse ont été appliqués pour la première fois de manière à connaître ces paramètres de configuration pour le capteur d'images et la source lumineuse au moment de l'acquisition de l'image, or avec un processeur non temps réel, ceci est problématique car de tels sources lumineuses ne disposent pas de fonctionnalité de métadonnée et ajouter des délais ralentirait considérablement la convergence et in fine les performances du dispositif. Enfin, une erreur de synchronisation (donc une erreur temporelle) se traduit sur un objet en mouvement par une erreur de position. Un système qui estime une position 3D sur une image non synchronisée aura donc une erreur de positionnement de sa caméra haute résolution. Une erreur de synchronisation ne permet donc pas de suivre des objets en mouvement car cela rend impossible la synchronisation exacte de positions tridimensionnelles acquises par une caméra de contexte et une configuration en position du système d'acquisition d'image, telle qu'une position de caméra haute résolution, dans le cadre par exemple de l'acquisition d'iris de personnes en mouvement.

US10296602 B1 divulgue un système robotisé avec un dispositif d'acquisition d'images dont le capteur de vision peut recevoir des instructions de synchronisation par un composant de processing (sync commands) et des instruction d'acquisition (capture triggers) par un composant d'interface fonctionnant dans un domaine d'horloge temps réel.

US2006/221187 A1 divulgue un système d'acquisition d'images transmettant en temps réel des données de géopositionnement d'une caméra capturant les images.

### Objet de l'invention

Un des buts de l'invention est de remédier à au moins une partie des inconvénients précités en fournissant un dispositif performant de traitement d'image permettant la reconnaissance d'objet en mouvement, tout en limitant son coût de fabrication.

### Bref exposé de l'invention

A cet effet, on prévoit, selon l'invention, un dispositif de traitement d'image comprenant :
- un système d'acquisition d'images ;
- un système synchrone de traitement de données, ledit système synchrone de traitement de données recevant au moins deux consignes, dont au moins une consigne d'acquisition d'image, et déterminant, d'après au moins une partie desdites consignes, des données de pilotage du système d'acquisition d'images, ledit système synchrone comportant un moyen synchrone d'horodatage horodatant, au moment de l'acquisition de l'image, au moins une des données de pilotage du système d'acquisition d'images;
- un moyen d'association de l'au moins une des données de pilotage horodatées du système d'acquisition d'images avec ladite image acquise au moment de l'acquisition de l'image par ajout de métadonnée à ladite image acquise ;
- un système asynchrone de traitement de ladite image acquise avec métadonnée associée, ledit système asynchrone de traitement de données générant et émettant vers le système synchrone de traitement de données les au moins deux consignes, dont au moins la consigne d'acquisition d'image est déterminée sur la base d'au moins une des images acquises avec métadonnée associée et notamment de l'au moins une des données de pilotage du système d'acquisition d'images horodatées associées à ladite au moins une image acquise. Ce dispositif permet d'éviter les latences de traitement d'images tout en n'étant pas intégralement temps réel et en garantissant la robustesse à la perte d'image, et permet d'affranchir le traitement d'image de la contrainte d'être synchrone.

Avantageusement, le dispositif comporte un autre système, différent du système d'acquisition d'images, et au moins une des deux consignes est une consigne destinée à l'autre système, le système synchrone de traitement de données déterminant, d'après au moins une partie desdites consignes, des données de pilotage de l'autre système, ledit moyen synchrone d'horodatage horodatant, au moment de l'acquisition de l'image, au moins une des données de pilotage de l'autre système;
- le moyen d'association de l'au moins une des données de pilotage horodatées de l'autre système avec ladite image acquise au moment de l'acquisition de l'image, par ajout de métadonnée à ladite image acquise ;
- le système asynchrone de traitement de ladite image acquise avec métadonnée associée générant et émettant vers le système synchrone de traitement de données les au moins deux consignes, la consigne destinée à l'autre système étant déterminée sur la base d'au moins une des images acquises et de l'au moins une des données de pilotage de l'autre système et/ou du système d'acquisition d'images horodatées associées à ladite au moins une image acquise, si bien que cela permet la synchronisation et le pilotage de conserve du système d'acquisition avec un autre système indépendant, sur la base notamment de la dernière image acquise mais pas exclusivement.

De manière avantageuse, l'autre système est un système d'éclairage et la consigne destinée à l'autre système est une consigne d'éclairage, ce qui permet notamment avec un même moyen d'horodatage de pouvoir synchroniser et piloter de conserve le système d'acquisition et le système d'éclairage. Ainsi le dispositif comporte un système d'éclairage et au moins une des deux consignes étant une consigne d'éclairage, le système synchrone de traitement de données déterminant, d'après au moins une partie desdites consignes, des données de pilotage du système d'éclairage, ledit moyen synchrone d'horodatage horodatant, au moment de l'acquisition de l'image, au moins une des données de pilotage du système d'éclairage;
- le moyen d'association associant l'au moins une des données de pilotage horodatées du système d'éclairage avec ladite image acquise au moment de l'acquisition de l'image, par ajout de métadonnée à ladite image acquise ;
- le système asynchrone de traitement de ladite image acquise avec métadonnée associée générant et émettant vers le système synchrone de traitement de données les au moins deux consignes, dont au moins la consigne d'éclairage est déterminée sur la base d'au moins une des images acquises et de l'au moins une des données de pilotage du système d'éclairage et/ou d'acquisition d'images horodatées associées à ladite au moins une image acquise. Avantageusement, le système d'éclairage comporte une source de rayonnement infra-rouge et en ce que le système d'éclairage ou d'acquisition d'images comporte un capteur sensible dans l'infrarouge, ce qui permet d'améliorer la détection de cibles indépendamment des conditions lumineuses environnementales et/ou de renforcer le dispositif contre la fraude et/ou de servir à la reconnaissance biométrique, tout en optimisant et sécurisant l'émission dans l'infrarouge.

De manière avantageuse, le système d'acquisition d'image comporte au moins une motorisation de visée et au moins un capteur d'images dont préférentiellement une caméra iris, ce qui permet de piloter adéquatement non seulement des données de pilotage telles que le gain, l'intensité mais aussi des positions de moteur(s), notamment panoramique/inclinaison, de manière à assurer le suivi de trajectoires de cibles mobiles et ainsi orienter rapidement le ou les caméras sur la cible et permettre ainsi notamment de faire de l'acquisition biométrique à la volée.

Avantageusement, le système d'acquisition d'image comporte au moins deux capteurs d'images et notamment un multiplexeur, ce qui permet d'obtenir par exemple d'acquérir une image panoramique à partir de plusieurs caméras de champ moindre, et le multiplexeur permet l'intégration en son sein d'un seul compteur (ou horloge) pour l'horodatage plutôt que d'en avoir un par capteur d'image.

De manière avantageuse, le système synchrone de traitement de données est un coprocesseur temps réel et le système asynchrone de traitement de données est un processeur non temps réel, ce qui permet l'utilisation de processeur non temps réel comme processeur principal sans pénaliser la latence du système, cette architecture rendant le dispositif performant et économique.

Avantageusement, le coprocesseur temps réel reçoit les images acquises par le système d'acquisition d'images et les transmet, chacune avec l'au moins une des données de pilotage du système d'acquisition d'images horodatées associées sous forme de métadonnée ajoutée à chacune desdites images acquises, au processeur non temps réel, le coprocesseur temps réel comportant le moyen d'association, le moyen synchrone d'horodatage étant notamment un compteur logiciel du coprocesseur temps réel, ce qui permet de piloter le système d'acquisition et l'autre de manière synchronisée, pour suivre une cible notamment en évaluant sa trajectoire sur la base des images et des informations de configuration au moment de l'acquisition de chaque image, associées par metadata à ladite image, l'horodatage dans le processeur temps réel, combiné à l'autre base de temps dans le processeur non temps réel permettant de faire l'association entre les données horodatées du processeur temps réel et l'image acquise..

De manière avantageuse, le processeur non temps réel reçoit les images acquises par le système d'acquisition d'images, le moyen synchrone d'horodatage comportant notamment :
- un compteur physique partagé entre le coprocesseur temps réel et le processeur non temps réel ;
   ou
- un compteur logiciel au sein du processeur non temps réel et un compteur logiciel au sein du coprocesseur temps réel, l'horodatage de l'image acquise étant associé à ladite image acquise par le processeur non temps réel, ce qui permet de proposer un dispositif dans lequel le coprocesseur temps réel ne reçoit alors pas les images acquises, tout en utilisant pour l'horodatage soit un moyen partagé tel qu'un compteur unique à double accès, optimisant l'architecture, ou un moyen dupliqué dans le processeur et coprocesseur avec deux bases de temps et un moyen d'association entre les données horodatées du processeur temps réel et l'image acquise.

Avantageusement, à partir de la deuxième image et pour chaque réception d'image suivante par le processeur non temps réel le processeur non temps réel récupère l'horodatage TS de l'image à metadata associée, et calcule un numéro d'image p comme étant l' arrondi de ((TS - TS de l'image précédente) divisé par la période T fixe de déclenchement des images, cette comparaison des horodatages deux à deux par lecture des metadata permet de numéroter les images et rend ainsi le processus insensible à la dérive ainsi qu'à la perte d'une ou plusieurs images (mauvaise transmission, erreur de transmission).

En outre, l'invention a aussi pour objet un système biométrique comportant un dispositif de traitement d'image selon l'invention, l'image acquise étant de visage et/ou d'iris, ce qui permet une reconnaissance biométrique, notamment à la volée avec suivi de personne en mouvement.

En outre, l'invention a aussi pour objet un procédé de traitement d'image comprenant des étapes de :
- acquisition d'une image ;
- horodatage synchrone horodatant, au moment de l'acquisition de l'image, au moins une donnée de pilotage d'un système d'acquisition d'images;
- association de l'au moins une donnée de pilotage horodatées du système d'acquisition d'images avec ladite image acquise au moment de l'acquisition de l'image par ajout d'une métadonnée à ladite image acquise ;
- traitement asynchrone de ladite image avec métadonnée associée générant en sortie au moins deux consignes, dont au moins une consigne d'acquisition d'image, laquelle est déterminée sur la base de l'image acquise et de l'au moins une donnée de pilotage du système d'acquisition d'images horodatée associée à ladite image acquise ;
- traitement synchrone de données, des données d'entrée du traitement synchrone comprenant les au moins deux consignes dont la consigne d'acquisition d'image, et générant en sortie, sur la base d'au moins une partie desdites consignes, des nouvelles données de pilotage du système d'acquisition d'images pilotant ledit système d'acquisition d'images pour l'acquisition d'une nouvelle image, présentant les mêmes avantages que le dispositif de traitement d'image selon l'invention.

Avantageusement,
- une des deux consignes est une consigne d'éclairage comportant une consigne d'intensité lumineuse, laquelle comportant notamment une consigne d'éclairage infrarouge ; et;
- le traitement synchrone de données génère en sortie, sur la base d'au moins une partie desdites consignes, des données de pilotage du système d'éclairage pilotant ledit système d'éclairage ;
ce qui permet le pilotage de conserve de systèmes séparés tels que le système d'acquisition et le système d'éclairage, sur la base de l'exploitation de leurs données propres de pilotage fusionnées à l'image qui les transporte au moyen de metadata.

De manière avantageuse, la consigne d'acquisition d'image comporte une trajectoire estimée d'un objet présent dans un champ optique d'acquisition d'images, et notamment l'objet est une caractéristique biométrique d'une personne tel qu'un iris et/ou un visage, ce qui permet le suivi d'un objet ou d'une personne et sa reconnaissance, notamment biométrique, à la volée.

Avantageusement, les données de pilotage du système d'acquisition d'images sont déterminées de manière à suivre ladite trajectoire estimée de l'objet, ce qui permet notamment de piloter une motorisation panoramique/inclinaison.

De manière avantageuse, à l'étape de traitement synchrone des données est créée une table comportant les données de pilotage horodatées d'au moins une dernière image acquise, ce qui permet de disposer de l'information des données de pilotage en lien avec leur horodatage dans une base de temps commune à tout le dispositif ou associable à une autre base de temps du dispositif, de manière robuste.

Avantageusement, l'étape de traitement asynchrone comporte l'exécution d'un algorithme qui est différent d'une trame à la trame suivante, notamment un algorithme pour les trames paires et un autre algorithme pour les trames impaires, ce qui permet de créer artificiellement deux caméras avec une seule. L'une pouvant par exemple traiter des images d'objets et l'autre des images de visages de personnes.

D'autres caractéristiques et avantages de l'invention ressortiront à la lecture de la description qui suit de modes de mise en œuvre particuliers non limitatifs de l'invention.

### Brève description des figures

[Fig. 1] La figure 1 décrit un exemple d'architecture de dispositif de traitement d'image selon un mode de réalisation de l'invention ;
[Fig. 2] La figure 2 décrit un premier mode de réalisation du dispositif de traitement d'image selon l'invention ;
[Fig. 3] La figure 3 décrit un second mode de réalisation du dispositif de traitement d'image selon l'invention ;
[Fig. 4] La figure 4 décrit un exemple de dispositif de traitement d'image selon une première alternative du second mode de réalisation ;
[Fig. 5] La figure 5 illustre l'architecture et les échanges entre les différents composants d'un dispositif de traitement d'image selon une première alternative du second mode de réalisation ;
[Fig. 6] La figure 6 est un exemple de chronogramme du procédé selon l'invention dans son application a un dispositif de traitement d'image selon une première alternative du second mode de réalisation ;
[Fig. 7] La figure 7 décrit un exemple de dispositif de traitement d'image selon une seconde alternative du second mode de réalisation ;
[Fig. 8] La figure 8 illustre un mécanisme de synchronisation d'un dispositif de traitement d'image selon une seconde alternative du second mode de réalisation ;
[Fig. 9] La figure 9 illustre un mécanisme de synchronisation d'un dispositif de traitement d'image selon une seconde alternative du second mode de réalisation et comportant un multiplexeur.

### Description détaillée

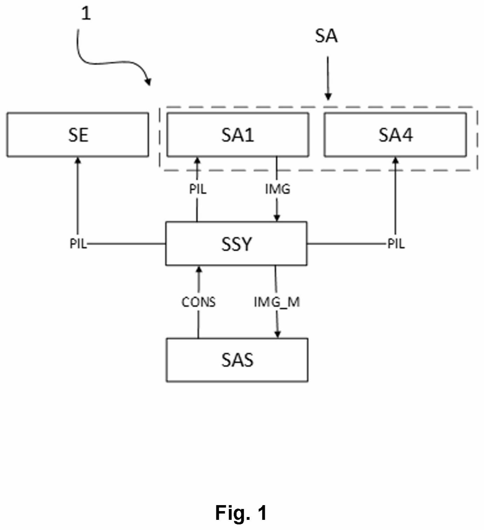

En référence à la figure 1, l'architecture du dispositif 1 de traitement d'image comporte :
- un système SE d'éclairage ;
- un système SA d'acquisition d'images, comportant notamment deux sous-systèmes, le premier étant un capteur SA1d'image, telle qu'une (ou plusieurs) caméra(s), notamment une caméra de contexte (ou plusieurs notamment pour la stéréoscopie) et une caméra haute résolution telle qu'une caméra iris, et le second une motorisation SA4 de la caméra haute résolution du capteur d'images ;
- un système SSY synchrone de traitement de données ;
- un système ASY asynchrone de traitement de données.

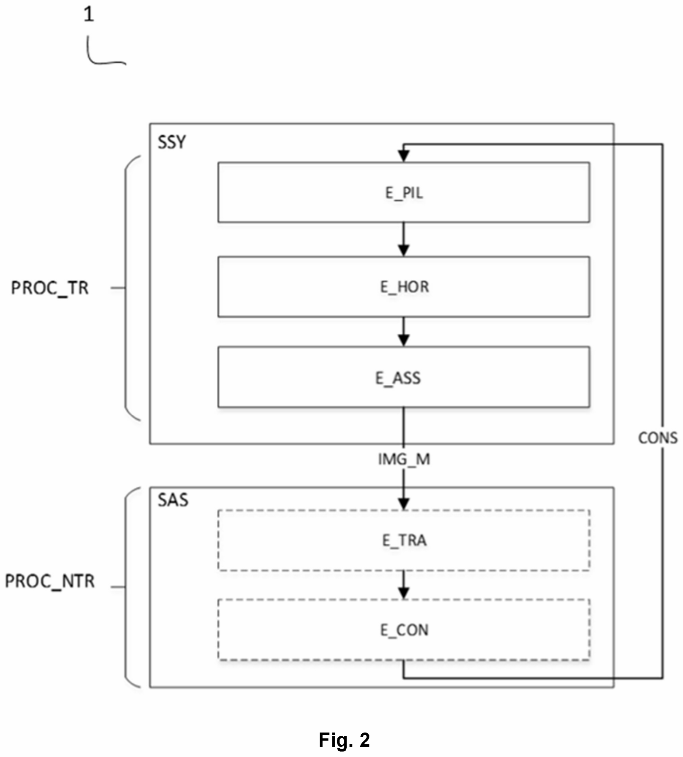

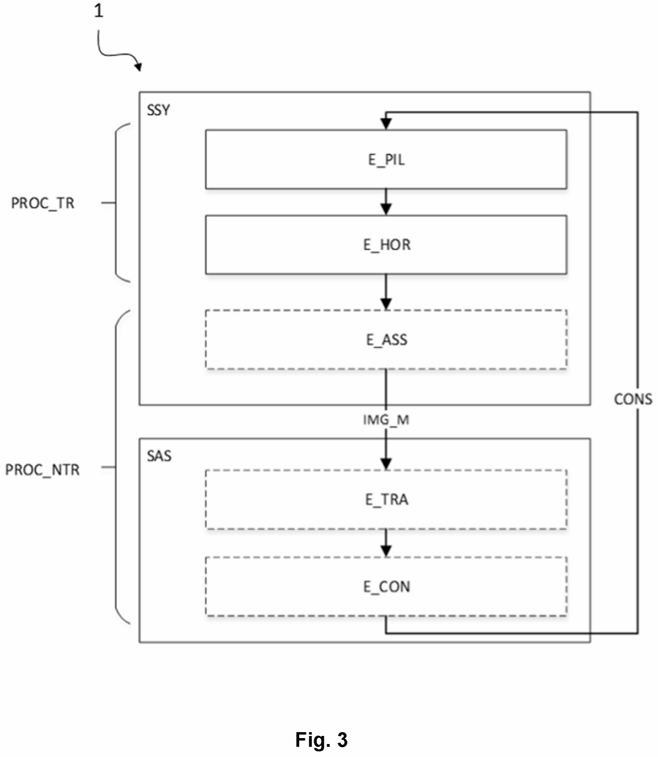

On notera que le moyen d'association n'est pas ici représenté pour des raisons de clarté de visualisation, l'étape d'association E_ASS a donc été représentée dans les figures 2 et 3 sous le système SSY synchrone.

En termes de procédé de fonctionnement dudit système, le procédé de traitement d'image effectue :
- à la trame N une première étape d'acquisition d'image IMG au moyen du système SA d'acquisition, par exemple selon des données PIL de pilotage données, notamment une configuration par défaut propre à l'initialisation, et envoi de ladite image IMG au système SSY synchrone, le flux d'image étant préférentiellement écrit par la couche de transport physique directement dans une mémoire volatile qui est lue par le processeur du système traitant l'image;
- à la même trame N de l'acquisition de l'image IMG, l'horodatage synchrone, par le système SSY synchrone, d'au moins une des données PIL de pilotage du système SA d'acquisition d'images appliquées au moment de l'acquisition de ladite image , par exemple le gain et/ou durée d'exposition du capteur d'images SA1 et/ou la position, et préférentiellement la vitesse de déplacement , du ou des moteurs de la motorisation SA4; ainsi que préférentiellement ici l'horodatage synchrone, d'au moins une des données (appelées aussi paramètres) PIL de pilotage du système SE d'éclairage appliquées au moment de l'acquisition de ladite image, par exemple l'intensité de la lumière infrarouge et/ou blanche ;
- association, par ledit système SSY synchrone, desdites certaines données PIL de pilotage horodatées appliquées au moment d'acquisition de ladite image IMG avec ladite image IMG acquise par ajout de métadonnée, comprenant ces dites données PIL de pilotage, à ladite image acquise, cette association des données PIL de l'image IMG acquise à la trame N (i.e. à l'instant n), à l'image IMG générée à la trame N (i.e. à l'instant n) pouvant être réalisée ultérieurement, et envoi de l'image IMG_M avec métadonnée associée au système SAS asynchrone ;
- à un instant égal ou ultérieur à la réception de l'image IMG_M avec métadonnée associée par le système SAS asynchrone, traitement asynchrone par le système SAS asynchrone de ladite image IMG_M avec métadonnée associée générant en sortie des consignes CONS envoyées vers le système SSY synchrone de traitement de données ; au moins une consigne CONS d'acquisition d'image (par exemple d'exposition et/ou gain et/ou de position ou trajectoire) étant déterminée sur la base de l'image IMG_M avec métadonnée associée, c'est-à-dire sur la base de ladite image acquise IMG et des données de pilotage du système SA d'acquisition d'images horodatées associées à ladite image IMG acquise à la trame N ; et ici de manière additionnelle une consigne CONS d'éclairage étant également déterminée sur la base de l'image IMG_M avec métadonnée associée, les consignes étant notamment déterminées sur la base de l'image et de leur(s) donnée(s) associée(s) au moyen de la métadonnée ;
- à la trame suivante N+1 ou ultérieure , traitement synchrone, par ledit système SSY synchrone, des données d'entrée du traitement synchrone comprenant ici lesdites deux consignes CONS, et générant en sortie, sur la base d'au moins une partie desdites consignes, des nouvelles données PIL de pilotage du système SA d'acquisition d'images pilotant ledit système d'acquisition d'images pour l'acquisition d'une nouvelle image.

Ainsi, les données PIL de pilotage pour une acquisition ultérieure (dès que possible, le délai dépendant de la conception du dispositif, comme expliqué plus loin) sont déterminées en fonction des configurations d'acquisition appliquées lors de l'acquisition de l'image précédente. Il n'y a pas à attendre un délai d'un nombre d'images pour être sûr qu'une configuration est appliquée, puisque les données de configurations sont associées aux images par ajout de métadonnée à ladite image, la métadonnée comprenant des données PIL de pilotage, le lien entre l'image et les données PIL de pilotage de la métadonnée correspondante à ladite image étant opéré grâce au processus d'horodatage.

Une partie de la métadonnée, peut être préexistante, inhérente au système SA d'acquisition d'images, cette partie de métadonnée pouvant être une donnée différente des données PIL de pilotage citée, mais être par exemple le numéro de série de la caméra SA1 ou un indicateur de qualité ou de santé du capteur d'images SA1 ; dans ce cas cette métadonnée est intégrée directement à l'image IMG acquise par le système d'acquisition, en fonction du capteur d'image SA1.

Pour effectuer le processus d'horodatage, le système synchrone SSY inclut un moyen synchrone d'horodatage et le système synchrone SSY déclenche le capteur d'image SA1, ainsi le système synchrone SSY connait exactement le moment et la durée d'exposition. De manière alternative, le capteur d'images SA1 se déclenche lui-même et envoie un signal de synchronisation au système synchrone. Les déclenchements peuvent être à intervalles fixes ou non quand le système synchrone SSY déclenche mais sont préférentiellement fixes dans le cas où le capteur d'images SA1 se déclenche lui-même.

Dans le mode de réalisation décrit ici, le système synchrone SSY envoie les paramètres de configuration, appelées aussi données de pilotage du système SA d'acquisition d'images à la (les) caméra(s) SA1, et conserve un enregistrement en mémoire de ces paramètres pour chaque image acquise. Préférentiellement la mémoire utilisée ici est de type volatile (appelée aussi mémoire RAM), la mémorisation étant à court terme, les données mémorisées se périmant notamment après un temps équivalent à quelques trames.

De même, le système synchrone SSY pilote le système SE d'éclairage et conserve un enregistrement en mémoire de ces données de pilotage pour chaque image acquise ; notamment l'intensité lumineuse au moment d'exposition de la (chaque) caméra SA1. De même, préférentiellement la mémoire utilisée ici est de type volatile RAM, la mémorisation étant à court terme, les données mémorisées se périmant notamment après un temps équivalent à quelques trames.

De manière avantageuse, le système synchrone SSY pilote la motorisation SA4 du capteur d'images SA1 de manière à le placer à la position attendue au moment requis d'après la consigne de trajectoire CONS fournie et calculée par le système SAS asynchrone.

Le système synchrone SSY peut notamment enregistrer en mémoire les données PIL de pilotage suivantes pour chaque trame :
- exposition et/ou gain du système d'acquisition SA1;
- intensité lumineuse pendant l'exposition du système SE d'éclairage ;
- position (x,y,z, ou pan/tilt/focus) de la motorisation SA4, sa vitesse à l'instant de la prise de vue.

De manière avantageuse, le système synchrone SSY peut déclencher la caméra haute résolution du capteur d'images SA1 seulement quand sa motorisation SA4 l'a positionnée sur la trajectoire CONS, c'est-à-dire quand elle a atteint la trajectoire, de manière à ce que seules les images pertinentes soient acquises par la caméra haute résolution.

Le système synchrone SSY associe toutes les données PIL de pilotage à l'image correspondante par l'ajout de métadonnée, potentiellement à une métadonnée déjà incluse dans ladite image, et ce, pour chaque image du flux d'images acquises ; de manière à ce que la synchronisation ne puisse plus être perdue.

Ainsi, le système SAS asynchrone reçoit les images IMG acquises avec métadonnée associée contenant les données PIL de pilotages du système d'acquisition SA propres au moment d'acquisition de ladite image.

Le système SAS asynchrone peut alors traiter les données reçues sans aucune contrainte temps réel :
- l'analyse de l'intensité est exécutée par l'algorithme de CAG, notamment sur une région d'intérêt ROI (de l'anglais Region Of Interest) telle que la partie de l'image contenant le visage de l'utilisateur. Le résultat généré en sortie de l'algorithme de CAG est un nouvel ensemble de consignes CONS de pilotage dont dériveront un ensemble de nouvelles données PIL de pilotage (à l'instant de l'application, choisi par le système synchrone SSY) ; notamment sous la forme de paramètres de configuration du capteur d'images SA1 (tels que nouveau temps d'exposition, gain) et du système d'éclairage SE ;
- la détection des yeux est exécutée par un algorithme de détection des yeux sur la base de plusieurs images consécutives, préférentiellement au moins deux, et préférentiellement les plus récentes, et génère en sortie une consigne CONS de trajectoire locale de suivi pour la motorisation SA4 du capteur SA1 d'images.

Dès que ces consignes CONS sont générées, elles sont transmises par le système SAS asynchrone au système SSY synchrone.

Deux exemples alternatifs de modes de réalisation physique des architectures systèmes sont décrits ici :
soit le coprocesseur est apte à recevoir directement les images IMG acquises, le coprocesseur associant alors des données PIL de pilotage sous forme de métadonnée à chaque image et transmettant au processeur lesdites images IMG_M avec métadonnée associée ;
soit le coprocesseur n'est pas apte à recevoir les images IMG acquises; notamment de par des limitations dues à son architecture; les images IMG acquises sont alors directement transmises par le système d'acquisition SA au processeur. Dans ce cas, l'association entre la nouvelle image acquise et les données PIL de pilotage de la métadonnée peut être réalisée par le processeur en utilisant l'horodatage enregistré par le processeur au moment où l'image IMG acquise parvient au processeur. En effet, même avec un processeur, appelé aussi plateforme, non temps réel, il peut être attribué à la tâche d'enregistrement de l'horodatage une priorité très élevée de manière à ce que l'horodatage soit enregistré aussitôt la réception de l'image IMG acquise par le processeur ; l'horodatage est alors sauvegardé par une tâche très courte et hautement prioritaire à la réception de l'interruption de rappel d'image prête (de l'anglais « call-back interrupt »), l'interruption servant à notifier le processeur que l'image a été copiée en mémoire et est disponible pour traitement.

Le premier mode de réalisation ; dans lequel le coprocesseur reçoit les images IMG acquises et les retransmet, est illustré par la figure 2.

Par processeur et coprocesseur il n'est fait ici aucune indication de dépendance de l'un par rapport à l'autre, mais une simple différenciation des deux. Dans le mode de réalisation illustré sur cette figure le système synchrone SSY est un processeur temps réel PROC_TR, appelé aussi coprocesseur, et le système asynchrone SAS est un processeur non temps réel PROC_NTR appelé ici aussi processeur. Dans ce mode de réalisation, le coprocesseur temps réel PROC_TR comporte le moyen d'association.

Toutes les étapes du système synchrone SSY sont dans ce premier mode de réalisation effectuées par le processeur temps réel PROC_TR, ce dernier recevant des CONS de pilotage, et :
- lors d'une étape E_PIL de pilotage il PROC_TR élabore des données de pilotage PIL conformes aux consignes CONS et pilote de manière synchrone le système d'acquisition SA : capteur d'images SA1 et motorisation SA4, et le système d'éclairage SE conformément aux consignes en leur appliquant des données de pilotage PIL conformes aux consignes CONS, une image IMG est alors acquise par le système d'acquisition SA et transmise au processeur temps réel PROC_TR ;
- puis lors d'une étape E_HOR le processeur temps réel PROC_TR crée une table de données de pilotage horodatées pour l'image IMG acquise et reçue ;
- et lors de l'étape E_ASS le processeur temps réel PROC_TR ajoute les données horodatées sous forme de métadonnées à ladite image IMG, générant ainsi l'image IMG_M avec métadonnée associée.

Toutes les étapes du système asynchrone SAS sont encadrées en pointillés et sont dans ce premier mode de réalisation effectuées par le processeur non temps réel PROC_NTR, ce dernier PROC_NTR recevant ladite image IMG_M avec métadonnée associée, et :
- lors d'une étape E_TRA le processeur non temps réel PROC_NTR traite la donnée reçue, c'est-à-dire l'image IMG_M avec métadonnée associée en l'analysant, plus particulièrement en effectuant une analyse statistique de l'intensité et/ou de la position des yeux dans ladite image IMG_M avec métadonnée associée, et ;
- étape E_CON de détermination des nouveaux paramètres de consigne CONS sous-forme de paramètres d'exposition et/ou éclairage et/ou création / mise à jour de la trajectoire des yeux pour l'acquisition suivante d'image.

Un second mode de réalisation ; dans lequel le coprocesseur PROC_TR ne reçoit pas les images IMG acquises, est illustré par la figure 3, les images IMG arrivant directement au processeur non temps réel PROC_NTR, ainsi:
- comme dans le mode de réalisation précédent, lors d'une étape E_PIL de pilotage il PROC_TR élabore des données de pilotage PIL conformes aux consignes CONS et pilote de manière synchrone le système d'acquisition SA : capteur d'images SA1 et motorisation SA4, et le système d'éclairage SE conformément aux consignes en leur appliquant des données de pilotage PIL conformes aux consignes CONS;
- puis, comme dans le mode de réalisation précédent, lors de l'étape E_HOR le processeur temps réel PROC_TR crée une table de données de pilotage horodatées pour l'image IMG acquise et reçue.

Dans ce second mode de réalisation, l'image IMG est alors acquise par le système d'acquisition SA et transmise au processeur non temps réel PROC_NTR, le processeur non temps réel PROC_NTR exécutant les étapes en pointillé, c'est à dire : des étapes du système synchrone SSY (l'étape d'association ayant été représentée sous le système synchrone SSY) et du système asynchrone SAS, toutes les étapes du système asynchrone SAS étant encadrées en pointillés:
- lors de l'étape E_ASS le processeur non temps réel PROC_NTR associe image IMG aux bonnes métadonnées grâce à l'horodatage TS, générant ainsi l'image IMG_M avec métadonnée associée ;
- comme dans le mode de réalisation précédent, lors de l'étape E_TRA le processeur non temps réel PROC_NTR traite la donnée reçue, c'est-à-dire l'image IMG_M avec métadonnée associée en l'analysant, plus particulièrement en effectuant une analyse statistique de l'intensité et/ou de la position des yeux dans ladite image IMG_M avec métadonnée associée, et ;
- étape E_CON de détermination des nouveaux paramètres de consigne CONS sous-forme de paramètres d'exposition et/ou éclairage et/ou création / mise à jour de la trajectoire des yeux pour l'acquisition suivante d'image.

Pour ce second mode de réalisation deux différentes alternatives sont décrites ici, ainsi :
- une première alternative consiste en un compteur physique partagé entre le coprocesseur temps réel PROC_TR et le processeur non temps réel PROC_NTR, l'horodatage TS étant alors envoyé à la fois au deux processeurs PROC_TR et PROC_NTR, le processeur non temps réel PROC_NTR requérant alors au coprocesseur temps réel PROC_TR les données de pilotage correspondant à l'horodatage TS reçu ;
- une seconde alternative ne comporte pas de compteur physique partage, mais consiste en un compteur logiciel au sein du processeur non temps réel PROC_NTR et un autre compteur logiciel, indépendant du premier compteur, au sein du coprocesseur temps réel PROC_TR, l'horodatage TS de l'image IMG acquise étant associé à ladite image acquise par le processeur non temps réel PROC_NTR. Le processeur non temps réel PROC_NTR doit alors connaitre le décalage entre les deux horodatages TS indépendants. Ce décalage peut être mesuré à la réception de la première image IMG, en comparant l'horodatage TS du processeur non temps réel PROC_NTR et l'horodatage TS du coprocesseur temps réel PROC_TR qui est enregistré sous forme de métadonnée dans ladite première image. Il est en effet possible qu'il existe un décalage entre les deux horodatages TS, notamment une dérive avec le temps, ce mode de détermination permet lors de la première acquisition d'image après le réveil du dispositif de déterminer ce décalage de manière à le connaitre pour toute la série d'acquisition, le considérant préférentiellement comme fixe pendant cette session de travail. En outre, cette dérive peut être compensée en appliquant un filtre de manière à adapter continûment le décalage sur la base des derniers offsets mesurés.

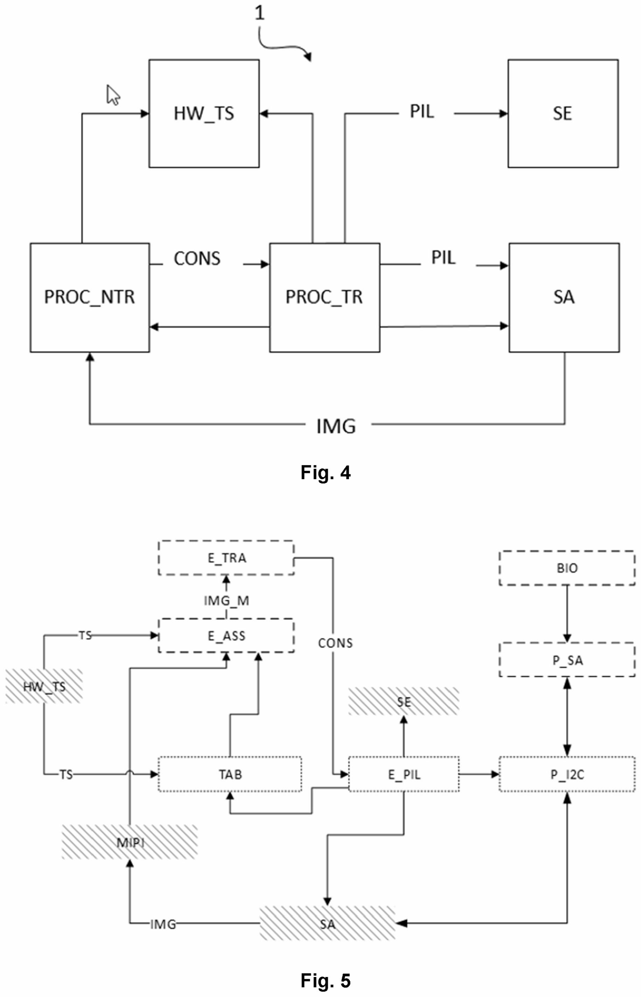

La figure 4 illustre un dispositif de traitement d'images selon l'invention, et plus particulièrement conforme au second mode de réalisation, dans sa première alternative, et comportant les composants suivants :
- un processeur non temps réel PROC_NTR, ici processeur principal, opérant un système d'exploitation non conçu pour le traitement temps réel, par exemple ARM Cortex-A53 sous linux ;
- un coprocesseur temps réel PROC_TR, opérant un système d'exploitation conçu pour le traitement temps réel de données, par exemple un Cortex M7 + FreeRTOS ;
- un compteur commun d'horodatage partage entre le processeur non temps réel PROC_NTR et le coprocesseur temps réel PROC_TR ;
- un canal de communication entre le processeur non temps réel PROC_NTR et le coprocesseur temps réel PROC_TR ;
- un canal de communication entre le coprocesseur temps réel PROC_TR et le système d'acquisition d'images SA.

Le coprocesseur PROC_TR est connecte directement au capteur d'image du système d'acquisition d'images SA et au système d'éclairage SE, et plus précisément a des diodes électroluminescentes DEL du système d'éclairage SE.

Le coprocesseur PROC_TR contrôle:
- le moment de déclenchement exact du système d'acquisition de l'image (puis le temps exact auquel l'image est acquise, capturée) ;
- le temps exact auquel les données PIL de pilotage (par exemple exposition et gain) sont appliquées, ainsi que potentiellement leur durée d'application ;
- le temps exact auquel les intensités des DEL du système d'éclairage SE sont mises à jour, potentiellement à chaque trame.

Dans cet exemple une puce IMX8MPLUS est utilisée et à l'intérieur de la puce se trouvent : un processeur principal non temps réel PROC_NTR : A53, et un coprocesseur temps réel PROC_TR : Cortex M7, et l'unique horloge, ou compteur, physique HW_TS est à l'intérieur de la puce, et partage car accessible à la fois au processeur PROC_NTR A53 et au coprocesseur PROC_TR M7.

La figure 5 illustre en partie le fonctionnement de cette architecture, pour raison de clarté toutes les étapes ne sont pas représentées, les composants ou étapes exécutées par le processeur non temps réel PROC_NTR sont entourés en pointilles et les composants ou étapes exécutées par le processeur temps réel PROC_TR sont entourés en traits pleins et les composants physiques sont représentés dans des zones hachurées.

Le composant BIO initialise, puis éteindra, au moyen de signaux d'initialisation et d'arrêt, le programme P_SA de pilotage de la caméra du système d'acquisition d'images, le programme P_SA communique des consignes à P_I2C de M7 . Le programme P_I2C communique avec le capteur d'image du système d'acquisition d'images SA notamment au moyen d'un protocole de type I2C. Puis, la première image acquise IMG, et plus généralement le flux d'images IMG, transitent par le composant MIPI de réception, avant d'être envoyée au processeur non temps réel PROC_NTR, et en parallèle le coprocesseur temps réel PROC_TR échantillonne , c'est-à-dire récupère la valeur courante, le compteur partagé HW_TS au moment où l'image est acquise puis le processeur PROC_NTR échantillonne le compteur partagé HW_TS un court instant plus tard, dès qu'il reçoit l'image via le call-back interrupt, c'est ainsi qu'est attribué l'horodatage correspondant au moment de l'acquisition de ladite image et de sa réception, qui l'enregistre dans une mémoire locale sous forme de table TAB, qui contient notamment pour un capteur infra rouge du système d'acquisition les données de pilotage, ou paramètres de configuration, du moment de l'acquisition de chaque image IMG: horodatage TS du moment de l'acquisition de ladite image, durée d'exposition de ladite image IMG , gain de ladite image IMG, modulation de largeur d'impulsion de la source de lumière infrarouge au moment de l'acquisition de ladite image IMG, et pour un capteur lumière rouge vert bleu RGB du système d'acquisition les données de pilotage, ou paramètres de configuration, du moment de l'acquisition de chaque image IMG : horodatage TS du moment de l'acquisition de ladite image IMG, durée d'exposition de ladite image IMG , gain de ladite image IMG, modulation de largeur d'impulsion de la source de lumière blanche au moment de l'acquisition de ladite image IMG, cette table TAB du coprocesseur M7 temps réel PROC_TR fournit alors les données nécessaires à l'étape d'association E_ASS exécutée par le processeur non temps réel PROC_NTR qui peut alors synchroniser l'image reçue IMG acquise à l'instant TS avec les données de pilotage appliquées audit instant horodaté TS par ajout de métadonnées a l'image IMG créant l'image IMG_M avec métadonnée associée. Les métadonnées associées pour chaque image et pour chaque capteur sont alors ici: la durée d'exposition, le gain, la modulation de largeur d'impulsion de la source de lumière infrarouge, modulation de largeur d'impulsion de la source de lumière blanche, la distance à l'objet capturé sur l'image (déterminée par analyse 3D et/ou à partir de la distance inter pupilles ou autre).

Il est alors procédé par le processeur non temps réel PROC_NTR à l'étape E_TRA de traitement de cette (ou plusieurs, telles que les deux dernières) image IMG_M avec métadonnée associée par algorithme CAG.

Puis le processeur PROC _NTR envoie au coprocesseur PROC_TR des consignes CONS pour la future acquisition comprenant notamment : la durée d'exposition, le gain, la modulation de largeur d'impulsion de la source de lumière infrarouge, modulation de largeur d'impulsion de la source de lumière blanche. En variante, les consignes CONS peuvent consister en ces mêmes paramètres (exposition, gain) pour une future trame paire d'acquisition et pour une future trame impaire d'acquisition.

Puis à l'étape E_PIL est commandé, par le coprocesseur PROC_TR, le futur déclenchement des capteurs du système d'acquisition SA et d'une source de lumière DEL du système d'éclairage SE selon les nouvelles données PIL de pilotage synchronisées, ici ces données étant les mêmes que les consignes CONS et ne nécessitant pas de traitement additionnel. En parallèle, le coprocesseur PROC _TR enregistre ces nouvelles données avec leur horodatage de l'horloge HW_TS dans la mémoire locale du coprocesseur PROC_TR comme explicité précédemment.

Puis le processus continue de manière itérative.

Pour chaque image capturée ( image trame numéro N), le coprocesseur PROC_TR exécute les étapes suivantes :
1- configuration du gain et de l'exposition de chaque capteur, en prenant en considération le délai exact requis par le capteur pour appliquer le nouvel ensemble de données de pilotage exactement à la trame numéro N ;
2-pilotage des DEL du système d'éclairage SE selon la donnée PIL de pilotage correspondant à l'intensité requise exactement pendant la durée d'acquisition de la trame numéro N, en sachant exactement le moment d'acquisition de cette dernière. En cas de source DEL infrarouge (invisible), la source est éteinte dès la fin de la durée d'exposition et en cas de source de lumière blanche, celle-ci peut rester émise de manière à éviter tout inconfort par variation brusque de l'environnement lumineux ;
3-enregistrer en mémoire, préférentiellement locale, les données suivantes dans une table:
   - l'horodatage TS, c'est à dire la valeur horodatée du temps d'horloge (compteur) au moment de l'acquisition de l'image de la trame numéro N;
   - les données de pilotage (gain, exposition) appliquées au moment de l'acquisition de la trame numéro N ;
   - les intensités des DEL (infrarouge et/ou blanche) ;
4-declenchement (envoi de signal) du système d'acquisition SA pour capturer la prochaine image : image trame numéro N+ 1.

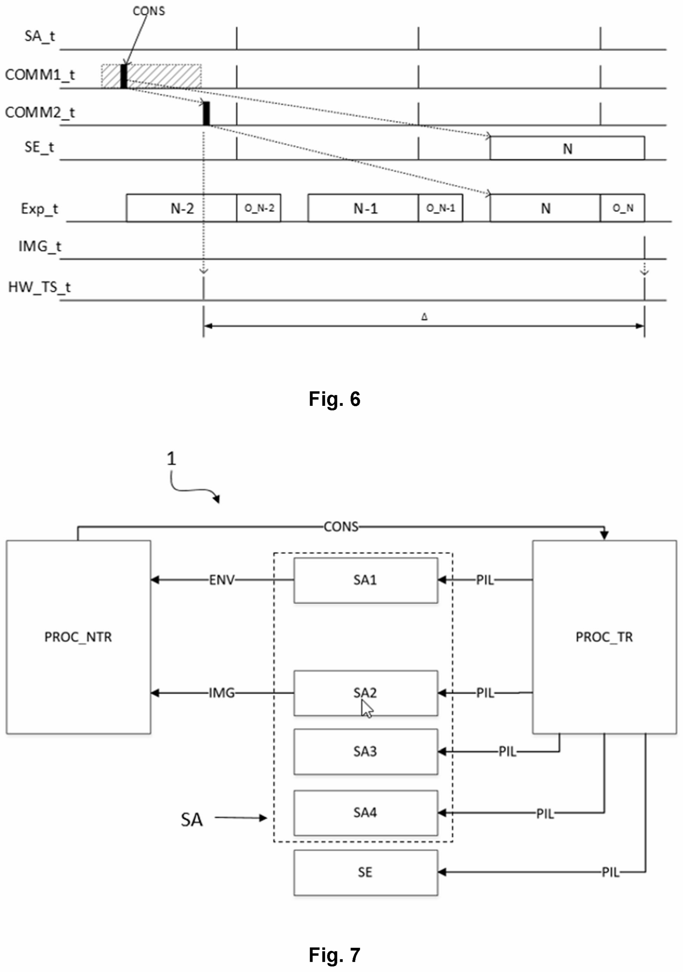

Le chronogramme de la figure 6 illustre sur ses différentes lignes la distribution dans le temps des signaux de :
- SA_t : déclenchement de la camera du système d'acquisition SA ;
- COMM1_t : communication de message (de consigne CONS) du processeur PROC _NTR vers le coprocesseur PROC_TR ;
- COMM2_t : communication de message (de données de pilotage PIL) du coprocesseur PROC_TR vers le capteur du système d'acquisition SA;
- SE_t : intensité lumineuse par le système d'éclairage SE ;
- Exp_t : exposition par le système d'acquisition SA ;
- IMG_t : réception de l'image IMG par le processeur PROC_NTR ;
- HW_TS_t : horodatage par l'horloge (compteur).

Ainsi, sur les cinq premières lignes sont reproduits les Dirac présents sur la ligne SA_t représentant les transitions de trame du système d'acquisition SA .

Sur la ligne COMM1_t la zone hachurée représente le cadre temporel autorisé pour la réception de message propre à la trame numéro N et le trait vertical épais représente le moment d'envoi du message comportant le gain et l'exposition , ainsi que l'intensité des DEL à appliquer CONS et dont partent deux flèches en pointillé, l'une désignant l'envoi résultant des données PIL de pilotage représenté par un trait vertical épais sur la ligne COMM2_t au moment de la fin de la zone hachurée car , ici, pour être pris en compte, COMM1_t doit absolument arriver au plus tard au début de COMM2_t, notamment dans la même trame, et l'autre désignant sur la ligne SE_t l'application de la nouvelle donnée de pilotage d'intensité lumineuse par le système d'éclairage SE, sachant que le délai avant l'application d'une nouvelle configuration est ici fixe et connue, de deux temps trames, si bien que la nouvelle intensité et nouvelle exposition (flèche partant du trait vertical épais sur la ligne COMM2_t) seront appliquées deux trames plus tard : pendant la trame N.

Sur la ligne SE_t, le cadre N illustre le cadre temporel pendant lequel sera appliquée la nouvelle intensité et sur la ligne Exp_t pour chaque trame est affiché un cadre temporel N-2,N-1,N représentant la période d'exposition propre à chaque trame et un cadre temporel O_N-2,O_N-1,O_N représentant la période de transfert de l'image vers le coprocesseur PROC_NTR.

On constate ici que c'est l'ordre COMM2_t qui est envoyé au système d'acquisition SA et qui va être pris en compte pour la trame N, car le système d'acquisition SA ne reçoit pas directement la COMM1_t, alors que le système d'éclairage SE est piloté directement par le PROC_TR, si bien que l'ordre l'affectant est directement celui reçu en COMM1_t.

Sur la ligne IMG_t le trait vertical illustre l'envoi du signal d'interruption pour la réception de l'image n par le processeur PROC_NTR.

Sur la ligne HW_TS_t, une flèche verticale partant de l'envoi des données PIL de pilotage représenté par un trait vertical épais sur la ligne COMM2_t désigne un premier trait vertical correspondant à l'horodatage effectue par le coprocesseur PROC_TR. Un second trait vertical est désigné par une flèche verticale descendant du signal d'interruption et correspondant à l'horodatage effectue par le processeur PROC _NTR au moment de la réception de l'image n par le processeur PROC_NTR, et la connaissance de ces deux trames permet l'association de l'image N aux paramètres de configuration propre au pilotage du système d'acquisition SA et d'éclairage SE lors de l'instant d'acquisition de l'image N. La durée Δ entre les deux horodatages est constante, connue et définie par conception du dispositif d'acquisition d'images.

Ainsi, quand l'image acquise est reçue par le processeur PROC_NTR, le pas de temps de l'horloge (compteur physique) est lu et associé à l'image acquise. Ces deux informations sont transmises à l'algorithme CAG exécuté sur le processeur PROC_NTR, l'algorithme envoie un message au coprocesseur PROC_TR pour obtenir la table de données. En se référant à la colonne de la table comprenant l'horodatage, l'algorithme CAG peut associer l'image acquise avec les paramètres de configuration définis par les données PIL de pilotage appliques au capteur au moment de l'acquisition de l'image. Il n'y a ainsi pas de contrainte temps réel sur l'algorithme CAG ; même si le logiciel évolue et que la charge CPU augmente, le CAG peut toujours rester fonctionnel sans risque d'erreur. Comme l'objectif du CAG est de changer les paramètres d'exposition et/ou gain et/ou intensité de DEL en fonction des images précédentes pour optimiser l'image, étant donné la latence (par exemple de 2 ou 3 trames) entre une image analysée et la prochaine image qui prendra en compte les nouvelles consignes CONS, il est inutile de changer les paramètres des images intermédiaires néanmoins il est possible que le CAG change l'exposition et/ou gain et/ou intensité de DEL pour chaque trame dans deux cas pour lesquels cela présente un intérêt : - l'implémentation de deux CAG opérant en parallèle, l'un traitant les trames paires, l'autre les trames impaires, les deux algorithmes CAG étant complètement indépendant et rendant possible une adaptation de la prise de vue par le système d'acquisition SA a deux types d'objets différents. Par exemple, un CAG optimise pour détecter et lire des codes a réponse rapide ou QR codes (de l'anglais quick response code) , notamment imprimés ou affichés sur un écran et permettant de donner l'accès à des bâtiments ou informations, et un autre optimisé pour détecter un visage d'utilisateur , ce qui permet ainsi de créer artificiellement deux caméras virtuelles tout en ne disposant que d'une seule caméra physique : par exemple l'une faisant une photo claire, l'autre une photo sombre en jouant sur la durée d'exposition (préférentiellement, la photo claire étant destinée à l'acquisition du visage et la plus sombre à l'acquisition du QR code car ce dernier est usuellement plus lumineux); l'implémentation d'une stratégie CAG de type balayage d'exposition pour laquelle les paramètres d'exposition /gain/intensité DEL peuvent être changés pour chaque trame, notamment jusqu'à « accrocher » un visage, en augmentant par exemple l'exposition, pour détecter le visage ou un autre objet quelles que soient les conditions lumineuses, de l'obscurité totale au plein soleil. Ce type d'algorithme CAG permet de détecter un visage même dans des conditions très difficiles, par exemple de fort contrejour, ou un petit visage sur un fond très sombre.

La figure 7 illustre un exemple de dispositif de traitement d'images selon l'invention, et plus particulièrement conforme au second mode de réalisation, dans sa seconde alternative, et son architecture comprend :
un processeur PROC _NTR sur lequel s'exécute l'application principale et le traitement d'image, ce processeur est orchestré par un système d'exploitation non temps réel (type linux) ;
un système SA1 de "caméra contexte" permettant de localiser l'utilisateur dans l'espace en 3D, par exemple par un système de stéréovision (ou de manière équivalente une caméra temps de vol, ou un système de vision tridimensionnel par lumière structurée) et comprenant ici deux caméras, le flux d'images ainsi généré est référencé ENV ;
un système SA2 de caméra iris haute résolution, générant un flux d'images iris IMG ;
un système SA3 de focalisation de la caméra iris permettant de modifier le position du plan de netteté de cette caméra ;
un système SA4 de motorisation de visée, ici panoramique/inclinaison, appelés aussi moteur pan/tilt, permettant de diriger la caméra iris dans n'importe quelle direction X/Y du volume de capture pour viser les yeux de l'utilisateur ;
un système d'éclairage SE , ou illuminateur, permettant d'éclairer les iris pendant la prise de vue ; et
un processeur temps réel PROC_TR.

Le processeur PROC_TR, appelé ici également coprocesseur, est responsable des tâches temps réel et à ce titre émet des données PIL de pilotage (notamment sur la base des consignes CONS reçues), ainsi :
- il déclenche la prise des images des caméras contextes SA1 à intervalle régulier (par exemple à la fréquence de 15 Hz)
- il pilote les déplacements des moteurs SA4 pan/tilt (par exemple avec un asservissement en position et/ou vitesse)
- il pilote les déplacements du moteur focus du système SA3 de focalisation de la caméra iris
- il déclenche la prise d'image sur la caméra iris SA2 au moment opportun
- il active l'illuminateur SE pour l'éclairage iris de manière synchrone avec la prise de vue.

Le processeur PROC_NTR, ici principal, reçoit un flux d'images contextes. Sur ces images contextes il détecte la présence d'un éventuel visage et dans ce cas il localise en 3 dimensions les yeux de la personne dans le champ de vision du système SA1 de "caméra contexte » du dispositif.

Sur la base de ces coordonnées tridimensionnelles, le processeur PROC_NTR principal estime la trajectoire des yeux, puis envoie la description de cette trajectoire au coprocesseur. Le coprocesseur PROC_TR asservit les moteurs SA4 pan/tilt en position et vitesse, de manière à rejoindre le plus tôt possible la trajectoire de consigne CONS qui lui a été envoyée par le processeur principal PROC_NTR.

Lorsque les moteurs SA4 pan/tilt ont "accroché" la trajectoire idéale, le coprocesseur PROC_TR déclenche la prise d'image iris de manière périodique.

Plus le coprocesseur PROC_TR reçoit des mises à jour de trajectoire souvent, plus il s'approchera de la trajectoire réelle des yeux.

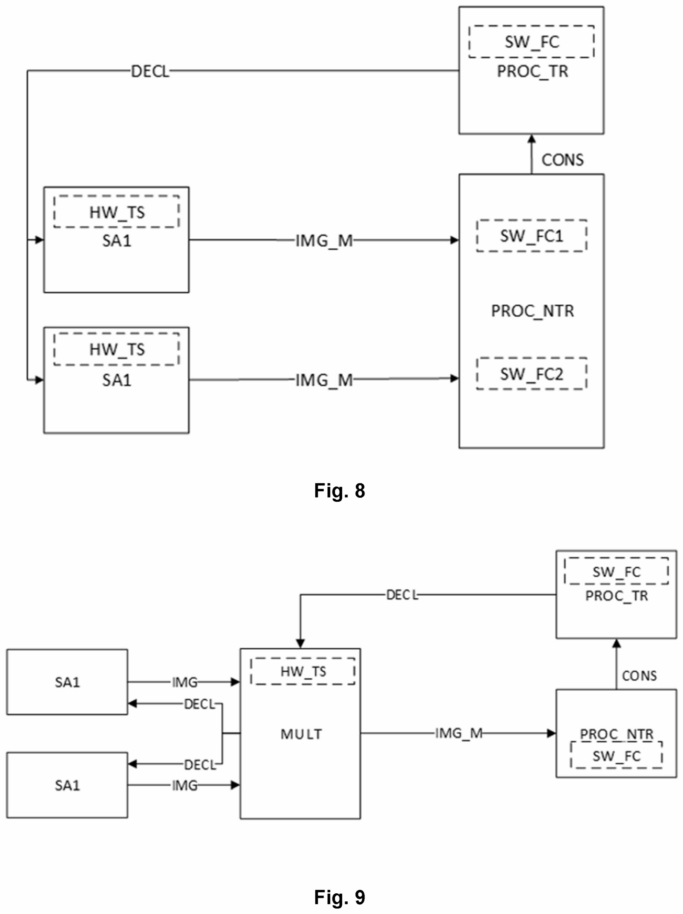

L'intérêt du mécanisme détaillé de synchronisation illustré en référence à la figure 8, est que l'envoi des commandes par le processeur principal PROC_NTR n'a pas de contrainte temps réel, ce qui permet d'utiliser un système d'exploitation multitâches non temps réel. Par exemple, cette trajectoire estimée des yeux devient une commande pour le pilotage des moteurs, mais il est aussi possible qu'entre la trajectoire estimée et la commande des moteurs, il y ait une étape additionnelle de filtrage ou autre et que les deux informations ne soient pas nécessairement identiques.

La synchronisation temps réel est assurée de cette manière :
- le coprocesseur PROC_TR déclenche la prise d'image sur les deux caméras SA1 contexte. Il incrémente à chaque fois son compteur logiciel de trames SW_FC, et mémorise localement notamment le couple de données : Tlast=compteur de trame courant et TSlast = horodatage TS du déclenchement DECL ;
- chaque caméra SA1 contexte génère sur sa sortie une et une seule image pour chaque déclenchement DECL, lesdites caméras SA1 contexte étant configurée en mode esclave ;
- chaque caméra SA1 contexte possède un compteur matériel HW_TS permettant d'horodater chaque image avec un horodatage TS (ou en anglais timestamp) ;
- cet horodatage TS est associé à chaque image en tant que métadonnée par chaque caméra SA1 contexte, transmettant ainsi les images IMG_M avec leurs métadonnées associées au processeur principal PROC_NTR ;
- le processeur principal PROC_NTR possède un compteur logiciel SW_FC1, SW_FC2 d'image pour chaque caméra SA1 contexte.

L'initialisation se passe de la manière suivante:
- les flux caméras SA1contexte étant initialement arrêtés, et le coprocesseur PROC_TR ne générant pas de signal de déclenchement DECL ;
- le processeur principal PROC_NTR demande au coprocesseur PROC_TR de mettre à 0 son compteur logiciel SW_FC de trame ;
- le processeur principal met à 0 ses propres compteurs ;
- le processeur principal PROC_NTR envoie une commande au coprocesseur PROC_TR pour démarrer le déclenchement DECL des images avec une période fixe T (en secondes, par exemple 1/15 s);
- lorsque la première image IMG_M de chaque flux contexte arrive sur le processeur PROC_NTR principal, celui-ci mémorise l'horodatage TS contenu dans l'image IMG_M. et il associe le numéro d'image 0 à cette première image IMG_M, en tant que nouvelle métadonnée supplémentaire.

A partir de la deuxième image et pour chaque réception d'image suivante par le processeur PROC_NTR principal :
- le processeur PROC_NTR principal récupère l'horodatage TS de l'image IMG_M, et calcule p = arrondi((TS - TS de l'image précédente) / T) et cette comparaison des horodatages deux à deux (deux dernières images) pour numéroter les images rend ainsi le processus insensible à la dérive ainsi qu'à la perte d'une ou plusieurs images (mauvaise transmission, erreur de transmission) ;
- il incrémente son compteur SW_FC1, SW_FC2 de trame associé à la caméra SA1 dont vient l'image IMG_M de la valeur p.

L'intérêt de la méthode est qu'en cas de forte charge du processeur PROC_NTR qui aurait pour conséquence de perdre éventuellement des images IMG_M, grâce à l'horodatage TS contenu dans les images IMG_M, la synchronisation des compteurs SW_FC1, SW_FC2 de trame n'est pas perdue.

La synchronisation n'est donc pas remise en cause quelle que soit la charge du processeur principal PROC_NTR.

La même synchronisation s'applique aussi dans le cas où plus de deux caméras contexte SA1 seraient utilisées, il suffit alors de dupliquer les compteurs HW_TS et SW_FC.

En référence à la figure 9, il convient de noter que le principe ne change pas dans le cas où 2 caméras SA1 contexte (ou plus) seraient multiplexées. Le multiplexeur MULT (par exemple Multiplexeur MIPI CSI) déclenche ici, la prise d'image sur les deux caméras SA1 contexte en même temps, sur réception d'un signal de déclenchement DECL (assimilable à une donnée de pilotage PIL) par le coprocesseur PROC_TR.

Dans ce cas c'est le multiplexeur MULT qui insère l'horodatage TS dans les métadonnées des images IMG_M.

Le cœur de 1 'invention repose sur 1 'utilisation d'un processeur PROC_TR temps réel pour maintenir avec précision une association entre l'image IMG, ENV capturée, i.e. acquise, et les données PIL de pilotage c'est-à-dire les paramètres d'acquisition, ie. de capture de cette image tels que les paramètres de configuration des capteurs, l'éclairage, les positions mécaniques et vitesses des moteurs dirigeant les caméras..., à l'instant de déclenchement de l'acquisition, capture, de ladite image. Le système peut être plus ou moins complexe (par exemple avec ou sans système d'éclairage, avec ou sans motorisation de caméra) et de même les données concernées peuvent être plus ou moins nombreuses, par exemple le temps d'exposition/gain et l'éclairage, ou par exemple uniquement les données de positionnement pour la gestion de la trajectoire, ou encore un mélange de tout ou partie de ces données auxquelles d'autres peuvent être ajoutées en fonction du besoin et de l'application.

## Revendications

1. Dispositif de traitement d'image (1) comprenant :
- un système d'acquisition d'images (SA) ;
- un système synchrone (SSY) de traitement de données, ledit système synchrone de traitement de données recevant au moins deux consignes (CONS), dont au moins une consigne d'acquisition d'image, et déterminant, d'après au moins une partie desdites consignes, des données de pilotage (PIL) du système d'acquisition d'images, ledit système synchrone comportant un moyen (HW_TS, SW_FC) synchrone d'horodatage horodatant, au moment de l'acquisition de l'image, au moins une des données de pilotage du système d'acquisition d'images;
- un moyen d'association de l'au moins une des données de pilotage horodatées du système d'acquisition d'images avec ladite image (IMG) acquise au moment de l'acquisition de l'image par ajout de métadonnée à ladite image acquise ;
- un système asynchrone (SAS) de traitement de ladite image (IMG_M) acquise avec métadonnée associée, ledit système asynchrone (SAS) de traitement de données générant et émettant vers le système synchrone (SSY) de traitement de données les au moins deux consignes (CONS), dont au moins la consigne d'acquisition d'image est déterminée sur la base d'au moins une des images acquises (IMG_M) avec métadonnée associée et notamment de l'au moins une des données (PIL) de pilotage du système d'acquisition d'images horodatées associées à ladite au moins une image acquise (IMG).

2. Dispositif de traitement d'image (1) selon la revendication précédente, **caractérisé en ce qu'**il comporte un autre système (SE), différent du système (SA) d'acquisition d'images, et au moins une des deux consignes (CONS) est une consigne destinée à l'autre système (SE), le système synchrone (SSY) de traitement de données déterminant, d'après au moins une partie desdites consignes (CONS), des données de pilotage (PIL) de l'autre système (SE), ledit moyen synchrone (HW_TS, SW_FC) d'horodatage horodatant, au moment de l'acquisition de l'image (IMG), au moins une des données de pilotage (PIL) de l'autre système (SE);
- le moyen d'association associant au moins une des données de pilotage horodatées de l'autre système (SE) avec ladite image acquise au moment de l'acquisition de l'image, par ajout de métadonnée à ladite image acquise ;
- le système asynchrone (SAS) de traitement de ladite image (IMG_M) acquise avec métadonnée associée générant et émettant vers le système synchrone de traitement de données les au moins deux consignes (CONS), la consigne destinée à l'autre système (SE) étant déterminée sur la base d'au moins une des images acquises et de l'au moins une des données de pilotage de l'autre système et/ou du système d'acquisition d'images horodatées associées à ladite au moins une image acquise.

3. Dispositif de traitement d'image (1) selon la revendication précédente, **caractérisé en ce que** l'autre système est un système d'éclairage (SE) et la consigne (CONS) destinée à l'autre système est une consigne d'éclairage.

4. Dispositif de traitement d'image (1) selon la revendication 3, **caractérisé en ce que** le système d'éclairage (SE) comporte une source de rayonnement infrarouge et **en ce que** le système d'éclairage (SE) ou d'acquisition d'images (SA) comporte un capteur sensible dans l'infrarouge.

5. Dispositif de traitement d'image (1) selon l'une quelconque des revendications précédentes, **caractérisé en ce que** le système d'acquisition d'image (SA) comporte au moins une motorisation de visée (SA4) et au moins un capteur d'images dont préférentiellement une caméra iris (SA2).

6. Dispositif de traitement d'image (1) selon l'une quelconque des revendications précédentes, **caractérisé en ce que** le système synchrone (SSY) de traitement de données est un coprocesseur temps réel (PROC_TR) et le système asynchrone (SAS) de traitement de données est un processeur non temps réel (PROC_NTR).

7. Dispositif de traitement d'image (1) selon la revendication précédente, **caractérisé en ce que** le coprocesseur temps réel (PROC_TR) reçoit les images acquises par le système d'acquisition d'images (SA) et les transmet, chacune avec l'au moins une des données (PIL) de pilotage du système d'acquisition d'images horodatées associées sous forme de métadonnée ajoutée à chacune desdites images acquises, au processeur non temps réel (PROC_NTR), le coprocesseur temps réel (PROC_TR) comportant le moyen d'association, le moyen synchrone d'horodatage (HW_TS) étant notamment un compteur logiciel du coprocesseur temps réel (PROC_TR).

8. Dispositif de traitement d'image (1) selon la revendication 6, **caractérisé en ce que** le processeur non temps réel (PROC_NTR) reçoit les images (IMG) acquises par le système d'acquisition d'images, le moyen synchrone d'horodatage (HW_TS, SW_FC) comportant notamment :
- un compteur physique (HW_TS) partagé entre le coprocesseur temps réel (PROC_TR) et le processeur non temps réel (PROC_NTR);
ou
- un compteur logiciel (SW_FC) au sein du processeur non temps réel (PROC_NTR) et un compteur logiciel (SW_FC) au sein du coprocesseur temps réel (PROC_NTR), l'horodatage de l'image acquise étant associé à ladite image acquise par le processeur non temps réel (PROC_NTR).

9. Système biométrique comportant un dispositif de traitement d'image (1) selon l'une quelconque des revendications précédentes, l'image (IMG) acquise étant de visage et/ou d'iris.

10. Procédé de traitement d'image comprenant des étapes de :
- acquisition d'une image (IMG) ;
- horodatage synchrone (E_HOR) horodatant, au moment de l'acquisition de l'image, au moins une donnée (PIL)de pilotage d'un système (SA) d'acquisition d'images;
- association (E_ASS) de l'au moins une données de pilotage horodatées du système d'acquisition d'images avec ladite image acquise au moment de l'acquisition de l'image par ajout d'une métadonnée à ladite image acquise ;
- traitement (E_TRA) asynchrone de ladite image (IMG_M) avec métadonnée associée générant en sortie au moins deux consignes (CONS), dont au moins une consigne d'acquisition d'image, laquelle est déterminée sur la base de l'image acquise et de l'au moins une donnée de pilotage du système d'acquisition d'images horodatée associée à ladite image acquise ;
- traitement (E_PIL) synchrone de données, des données d'entrée du traitement synchrone comprenant les au moins deux consignes dont la consigne d'acquisition d'image, et générant en sortie, sur la base d'au moins une partie desdites consignes (CONS), des nouvelles données (PIL) de pilotage du système (SA) d'acquisition d'images pilotant ledit système d'acquisition d'images pour l'acquisition d'une nouvelle image (IMG).

11. Procédé de traitement d'image selon la revendication précédente, **caractérisé en ce que** :
- une des deux consignes (CONS) est une consigne d'éclairage comportant une consigne d'intensité lumineuse, laquelle comportant notamment une consigne d'éclairage infrarouge ; et **en ce que** ;
- le traitement (E _PIL) synchrone de données génère en sortie, sur la base d'au moins une partie desdites consignes, des données de pilotage (PIL) du système d'éclairage pilotant ledit système d'éclairage (SE).

12. Procédé de traitement d'image selon l'une quelconque des revendications 10 à 11, **caractérisé en ce que** la consigne (CONS) d'acquisition d'image comporte une trajectoire estimée d'un objet présent dans un champ optique d'acquisition d'images, et notamment l'objet est une caractéristique biométrique d'une personne tel qu'un iris et/ou un visage.

13. Procédé de traitement d'image selon la revendication précédente, **caractérisé en ce que** les données (PIL) de pilotage du système d'acquisition (SA) d'images sont déterminées de manière à suivre ladite trajectoire estimée de l'objet.

14. Procédé de traitement d'image selon l'une quelconque des revendications 10 à 13, **caractérisé en ce qu'**à l'étape de traitement (E_PIL) synchrone des données est créée une table (TAB) comportant les données (PIL) de pilotage horodatées d'au moins une dernière image (IMG) acquise.

15. Procédé de traitement d'image selon l'une quelconque des revendications 10 à 14, **caractérisé en ce que** l'étape de traitement (E_TRA) asynchrone comporte l'exécution d'un algorithme qui est différent d'une trame à la trame suivante, notamment un algorithme pour les trames paires et un autre algorithme pour les trames impaires.

## Patentansprüche

1. Bildverarbeitungsvorrichtung (1) mit:
- ein Bildaufnahmesystem (SA);
- ein synchrones Datenverarbeitungssystem (SSY), wobei das System mindestens zwei Befehle (CONS) empfängt, darunter mindestens einen Bildaufnahmesbefehl, und anhand mindestens eines Teils der Befehle die Steuerdaten (PIL) des Bildaufnahmessystems bestimmt, wobei das Synchronsystem ein Mittel (HW_TS, SW_FC) zum zeitlichen Markieren, das zum Zeitpunkt der Erfassung von des Bildes mindestens eine der Steuerdaten des Bildaufnahmesystems mit einem Zeitstempel versieht;
- Mittel zum Zuordnen der mindestens einen der mit einem Zeitstempel versehenen Steuerdaten des Bildaufnahmesystems zu dem zum Zeitpunkt der Bildaufnahme aufgenommenen Bild (IMG) durch Hinzufügen von Metadaten zu dem aufgenommenen Bild;
- ein asynchrones System (SAS) zur Verarbeitung des mit zugehörigen Metadaten erfassten Bildes (IMG_M), wobei das asynchrone Datenverarbeitungssystem (SAS) mindestens zwei Befehle (CONS) generiert und an das synchrone Datenverarbeitungssystem (SSY) sendet, von denen mindestens der Bildaufnahmesbefehl auf der Grundlage mindestens eines der Bilder bestimmt wird (IMG_M) mit zugehörigen Metadaten und insbesondere mindestens einer der Steuerdaten (PIL) des Systems zur Erfassung von mit einem Zeitstempel versehenen Bildern, die dem mindestens einen erfassten Bild (IMG) zugeordnet sind, bestimmt wird.

2. Bildverarbeitungsvorrichtung (1) nach dem vorhergehenden Anspruch, **dadurch gekennzeichnet, dass** sie ein weiteres System (SE) umfasst, das sich von dem System (SA) zur Bilderfassung, und mindestens eine der beiden Anweisungen (CONS) eine Anweisung für das andere System (SE) ist, wobei das synchrone Datenverarbeitungssystem (SSY) anhand mindestens eines Teils der genannten Vorgaben (CONS) die Steuerdaten (PIL) des anderen Systems (SE) bestimmt, wobei die genannte synchrone Zeitstempelvorrichtung (HW_TS, SW_FC) zum Zeitpunkt Erfassung des Bildes (IMG) mindestens eine der Steuerdaten (PIL) des anderen Systems (SE) mit einem Zeitstempel versieht;
- das Verknüpfungsmittel, das mindestens eine der mit einem Zeitstempel versehenen Steuerdaten des anderen Systems (SE) mit dem zum Zeitpunkt der Bildaufnahme aufgenommenen Bild verknüpft, indem es dem aufgenommenen Bild Metadaten hinzufügt;
- das asynchrone System (SAS) zur Verarbeitung des mit zugeordneten Metadaten erfassten Bildes (IMG_M), das die mindestens zwei Befehle (CONS) generiert und an das synchrone Datenverarbeitungssystem sendet, wobei die Anweisung für das andere System (SE) auf der Grundlage von mindestens einem der erfassten Bilder und mindestens einer der Steuerdaten des anderen Systems und/oder des Systems zur Erfassung von mit einem Zeitstempel versehenen Bildern, die mit dem mindestens einen Bilder.

3. Bildverarbeitungsvorrichtung (1) nach dem vorhergehenden Anspruch, **dadurch gekennzeichnet, dass** das andere System ein Beleuchtungssystem (SE) ist und der Befehl (CONS) für das andere System ein Beleuchtungsbefehl, ist.

4. Bildverarbeitungsvorrichtung (1) nach Anspruch 3, **dadurch gekennzeichnet, dass** das Beleuchtungssystem (SE) eine Infrarotstrahlungsquelle umfasst und dass das Beleuchtungs (SE)- oder Bilderfassungssystem (SA) einen infrarotempfindlichen Sensor umfasst.

5. Bildverarbeitungsvorrichtung (1) nach einem der vorstehenden Ansprüche, **dadurch gekennzeichnet, dass** das Bildaufnahmesystem (SA) mindestens einen Antrieb zum Ausrichten (SA4) und mindestens einen Bildsensor, vorzugsweise eine Iris-Kamera (SA2), umfasst.

6. Bildverarbeitungsvorrichtung (1) nach einem der vorstehenden Ansprüche, **dadurch gekennzeichnet, dass** das synchrone Datenverarbeitungssystem (SSY) ein Echtzeit-Coprozessor (PROC_TR) ist und das asynchrone System (SAS) zur Datenverarbeitung ein Nicht-Echtzeitprozessor (PROC_NTR) ist.

7. Bildverarbeitungsvorrichtung (1) nach dem vorhergehenden Anspruch, **dadurch gekennzeichnet, dass** der Echtzeit-Coprozessor (PROC_TR) die vom Bildaufnahmesystem (SA) aufgenommenen Bilder empfängt und diese jeweils zusammen mit mindestens einem der Steuerdaten (PIL) des Bildaufnahmesystems in Form von Metadaten, die jedem Bild hinzugefügt werden die erfassten Bilder hinzugefügt werden, an den Nicht-Echtzeit-Prozessor (PROC_NTR) überträgt, wobei der Echtzeit-Coprozessor (PROC_TR) die Zuordnungsvorrichtung umfasst und die synchrone Zeitstempelvorrichtung (HW_TS) insbesondere ein Softwarezähler des Echtzeit-Coprozessors (PROC_TR) ist.

8. Bildverarbeitungsvorrichtung (1) gemäß Anspruch 6, **dadurch gekennzeichnet, dass** der Nicht-Echtzeit-Prozessor (PROC_NTR) die vom Bildaufnahmesystem aufgenommenen Bilder (IMG) empfängt, wobei die synchrone Zeitstempelvorrichtung (HW_TS, SW_FC) insbesondere umfasst:
- einen physikalischen Zähler (HW_TS), der zwischen dem Echtzeit-Coprozessor (PROC_TR) und dem Nicht-Echtzeitprozessor (PROC_NTR) gemeinsam genutzt wird; oder
- einen Softwarezähler (SW_FC) innerhalb des Nicht-Echtzeitprozessors (PROC_NTR) und einen Softwarezähler (SW_FC) innerhalb des Echtzeit-Coprozessors (PROC_NTR), wobei die Zeitstempelung des erfassten Bildes mit diesem Bild verknüpft ist, das vom Nicht-Echtzeitprozessor (PROC_NTR) erfasst wurde.

9. Biometrisches System mit einer Bildverarbeitungsvorrichtung (1) gemäß einem der vorstehenden Ansprüche, wobei das erfasste Bild (IMG) ein Gesichts- und/oder Irisbild ist.

10. Bildverarbeitungsverfahren, das folgende Schritte umfasst:
- Erfassen eines Bildes (IMG);
- synchrones Zeitstempeln (E_HOR), das zum Zeitpunkt der Erfassung des Bildes, mindestens einen Steuerdaten (PIL) eines Bildaufnahme-Systems (SA);
- Zuordnung (E_ASS) der mindestens einen zeitgestempelten Steuerdaten des Bildaufnahmesystems zu dem zum Zeitpunkt der Erfassung erfassten Bild Erfassung des Bildes durch Hinzufügen von Metadaten zu dem erfassten Bild;
- asynchrone Verarbeitung (E_TRA) des Bildes (IMG_M) mit zugeordnetem Metadaten, wodurch mindestens zwei Befehle (CONS) erzeugt werden, darunter mindestens ein Bildaufnahmesbefehl, der auf der Grundlage des aufgenommenen Bildes und der mindestens einen Steuerdaten des Aufzeichnungssystems bestimmt wird mit Zeitstempel, die dem erfassten Bild zugeordnet sind;
- synchrone Verarbeitung (E_PIL) von Daten, wobei die Eingangsdaten der synchronen Verarbeitung die mindestens zwei Befehle, darunter den Befehl zur Bilderfassung, umfassen und auf der Grundlage mindestens eines Teils den Befehlen (CONS) neue Daten (PIL) zur Steuerung des Systems (SA) zur Bilderfassung, die das Bilderfassungssystem zur Erfassung eines neuen Bildes (IMG) steuern.

11. Bildverarbeitungsverfahren nach dem vorhergehenden Anspruch, **dadurch gekennzeichnet, dass**:
- eine der beiden Vorgaben (CONS) eine Beleuchtungsvorgabe ist, die eine Lichtintensitätsvorgabe umfasst, die insbesondere eine Infrarotbeleuchtungsvorgabe umfasst; und dass
- die synchrone Datenverarbeitung (E_PIL) auf der Grundlage mindestens eines Teils der genannten Befehle Steuerdaten (PIL) des Beleuchtungssystems erzeugt, die das genannte Beleuchtungssystem (SE) steuern.

12. Bildverarbeitungsverfahren gemäß einem der Ansprüche 10 bis 11, **dadurch gekennzeichnet, dass** der Befehl (CONS) für die Bildaufnahme eine geschätzte Bahn eines Objekts umfasst, das sich in einem optischen Bildaufnahmefeld befindet, und insbesondere das Objekt ein biometrisches Merkmal einer Person ist, wie beispielsweise eine Iris und/oder ein Gesicht.

13. Bildverarbeitungsverfahren nach dem vorhergehenden Anspruch, **dadurch gekennzeichnet, dass** die Steuerdaten (PIL) des Bildaufnahmesystems (SA) so bestimmt werden, dass sie der geschätzten Bahn des Objekts folgen.

14. Bildverarbeitungsverfahren nach einem der Ansprüche 10 bis 13, **dadurch gekennzeichnet, dass** in der synchronen Datenverarbeitungsschritt (E_PIL) eine Tabelle (TAB) erstellt wird, die die mit einem Zeitstempel versehenen Steuerdaten (PIL) mindestens eines zuletzt erfassten Bildes (IMG) enthält.

15. Bildverarbeitungsverfahren nach einem der Ansprüche 10 bis 14, **dadurch gekennzeichnet, dass** der asynchrone Verarbeitungsschritt (E_TRA) die Ausführung eines Algorithmus umfasst, der sich von einem Bild zum nächsten unterscheidet, insbesondere einen Algorithmus für gerade Bilder und einen anderen Algorithmus für ungerade Bilder.

## Claims

1. Image processing device (1) comprising:
- an image acquisition system (SA);
- a synchronous data processing system (SSY), said synchronous data processing system receiving at least two instructions (CONS), including at least one image acquisition instruction, and determining, based on at least a portion of said instructions, control data (PIL) for the image acquisition system, said synchronous system comprising a means (HW_TS, SW_FC) for synchronous time stamping, time stamping, at the time of acquisition of the image, at least one of the control data of the image acquisition system;
- means for associating at least one of the time-stamped control data of the image acquisition system with said image (IMG) acquired at the time of image acquisition by adding metadata to said acquired image;
- an asynchronous system (SAS) for processing said image (IMG_M) acquired with associated metadata, said asynchronous data processing system (SAS) generating and transmitting to the synchronous data processing system (SSY) at least two instructions (CONS), of which at least the image acquisition instruction is determined on the basis of at least one of the images acquired (IMG_M) with associated metadata and, in particular, at least one of the data (PIL) for controlling the timestamped image acquisition system associated with said at least one acquired image (IMG).

2. Image processing device (1) according to the previous claim, wherein it comprises another system (SE), different from the system (SA) for acquiring images, and at least one of the two instructions (CONS) is an instruction intended for the other system (SE), the synchronous data processing system (SSY) determining, based on at least a portion of said instructions (CONS), control data (PIL) for the other system (SE), said synchronous time-stamping means (HW_TS, SW_FC) time-stamping, at the moment of the acquisition of the image (IMG), at least one of the control data (PIL) of the other system (SE);
- the association means associating at least one of the timestamped control data of the other system (SE) with said image acquired at the time of image acquisition, by adding metadata to said acquired image;
- the asynchronous system (SAS) for processing said image (IMG_M) acquired with associated metadata generating and transmitting to the synchronous data processing system the at least two instructions (CONS), the instruction intended for the other system (SE) being determined on the basis of at least one of the acquired images and at least one of the control data from the other system and/or the system for acquiring time-stamped images associated with said at least one of the image acquired.

3. Image processing device (1) according to the previous claim, wherein the other system is a lighting system (SE) and the instruction (CONS) intended for the other system is a lighting instruction.

4. Image processing device (1) according to claim 3, wherein the lighting system (SE) comprises an infrared radiation source and the lighting system (SE) or image acquisition system (SA) comprises a sensor sensitive to infrared radiation.

5. Image processing device (1) according to any of the preceding claims, wherein the image acquisition system (SA) comprises at least one motorised aiming system (SA4) and at least one image sensor, preferably an iris camera (SA2).

6. Image processing device (1) according to any of the preceding claims, wherein the synchronous data processing system (SSY) is a real-time coprocessor (PROC _TR) and the asynchronous (SAS) data processing system is a non-real-time processor (PROC_NTR).

7. Image processing device (1) according to the previous claim, wherein the real-time coprocessor (PROC_TR) receives the images acquired by the image acquisition system (SA) and transmits them, each with at least one of the acquisition system control data (PIL) associated with the acquired images in the form of metadata added to each said acquired images, to the non-real-time processor (PROC_NTR), the real-time coprocessor (PROC_TR) comprising the association means, the synchronous time-stamping means (HW_TS) being in particular a software counter of the real-time coprocessor (PROC_TR).

8. Image processing device (1) according to claim 6, wherein the non-real-time processor (PROC_NTR) receives the images (IMG) acquired by the image acquisition system, the synchronous time-stamping means (HW_TS, SW_FC) comprising in particular:
- a physical counter (HW_TS) shared between the real-time coprocessor (PROC_TR) and the non-real-time processor (PROC_NTR); or
- a software counter (SW_FC) within the non-real-time processor (PROC_NTR) and a software counter (SW_FC) within the real-time coprocessor (PROC_NTR), the timestamp of the acquired image being associated with said image acquired by the non-real-time processor (PROC_NTR).

9. Biometric system comprising an image processing device (1) according to any of the preceding claims, the acquired image (IMG) being of a face and/or iris.

10. Image processing method comprising the steps of:
- acquiring an image (IMG);
- synchronous timestamping (E_HOR) timestamping, at the time of acquisition of the image, at least one item of control data (PIL) for controlling an image acquisition system (SA);
- association (E_ASS) of the at least one timestamped control data item from the image acquisition system with said acquired image at the time of acquisition of the image by adding metadata to said acquired image;
- asynchronous processing (E_TRA) of said image (IMG_M) with associated metadata generating at least two instructions (CONS) as output, including at least one image acquisition instruction, which is determined on the basis of the acquired image and the at least one item of control data from the acquisition system associated with said acquired image;
- synchronous processing (E_PIL) of data, the input data for the synchronous processing comprising the at least two instructions, including the image acquisition instruction, and generating, as output, on the basis of at least part of said instructions (CONS), new system control data (PIL) of the image acquisition system (SA) controlling said image acquisition system for acquiring a new image (IMG).

11. Image processing method according to the previous claim, wherein:
- one of the two instructions (CONS) is a lighting instruction comprising a light intensity instruction, which includes in particular an infrared lighting instruction; and in that;
- the synchronous data processing (E_PIL) generates, on the basis of at least a portion of said instructions, control data (PIL) for the lighting system controlling said lighting system (SE).

12. Image processing method according to any of claims 10 to 11, wherein the image acquisition instruction (CONS) includes an estimated trajectory of an object present in an image acquisition optical field, and in particular the object is a biometric characteristic of a person such as an iris and/or a face.

13. Image processing method according to the previous claim, wherein the data (PIL) for controlling the image acquisition system (SA) are determined so as to follow the said estimated trajectory of the object.

14. Image processing method according to any of claims 10 to 13, wherein, in the synchronous data processing step (E_PIL) is created a table (TAB) comprising the time-stamped control data (PIL) of at least one last acquired image (IMG).

15. Image processing method according to any of claims 10 to 14, wherein the asynchronous processing step (E_TRA) comprises the execution of an algorithm that is different from one frame to the next, in particular an algorithm for even frames and another algorithm for odd frames.
